# EUROPEAN PATENT APPLICATION

(11) **EP 4 250 757 A2**
(43) Date of publication of application: **27.09.2023**
(21) Application number: 23164024.4
(22) Date of filing: 24.03.2023
(51) Int. Cl.: H04N 23/74

(54) **SYNCHRONOUS OPERATION OF LIGHT EMITTING DIODES FOR VISION SYSTEMS**

(30) Priority: 25.03.2022 US 202263323933 P
(71) Applicant: Nio Technology (Anhui) Co., Ltd, Hefei City, Anhui 230000 (CN)
(72) Inventor: GILL, Karanbir S., Milpitas, 95035 (US); CHAN, Wing Jong, San Jose, 95133 (US); LI, Yiyong, Pleasanton, 94588 (US); JOHNSON, Karl Yngve, Felton, 95018 (US); SAMSON, Matthew L., San Jose, 95133 (US)
(74) Representative: Vossius & Partner Patentanwälte Rechtsanwälte mbB

(57) **Abstract**

A vision system includes an image sensor configured to be exposed to a scene during exposure times, a light emitting diode (LED) driver operatively connected to the image sensor, an LED associated with the image sensor and operatively connected to the LED driver, and one or more processing circuits that synchronize pulses of an enable signal to the exposure times of the image sensor so that each pulse of the enable signal overlaps with one of the exposure times. The pulses of the enable signal are used by the LED driver to cause the LED to output light to the scene.

## Description

### CROSS REFERENCE TO RELATED APPLICATIONS

This application claims the benefit of U.S. Provisional Application No. 63/323,933, filed on March 25, 2022, which application is incorporated herein by reference in its entirety.

### BACKGROUND

Driver monitoring camera systems is an emerging in-cabin camera technology that monitors the state of the driver through facial recognition. A driver monitoring camera is also required to be operational without any source of external light from the environment (i.e., during night). For that reason, driver or occupant monitoring systems typically employ one or more near infrared (NIR) light emitting diodes (LEDs) to actively output light to the subject and interior of the vehicle cabin when being imaged by an imaging system (e.g., camera, image sensor, etc.). When operated for long periods of time at maximum duty cycle, these NIR LEDs can generate significant amounts of heat, reducing the system's ability to operate at a higher ambient operating temperature point, increasing electrical power consumption, limiting the peak light output required by the imaging system, and reducing the lifespan of NIR LEDs. As a result, special packaging is required to house NIR LEDs, especially when used inside vehicles. Without special packaging (e.g., incorporating heat sinks, heat resistant materials, and athermalized designs, etc.), the NIR LEDs may generate enough heat to fail non-passively, and could also lead to the melting of certain enclosure materials at high operating temperature points. The increase in power consumption reduces vehicle efficiency. Also, increased operating temperatures and the decrease in peak light output results in images that have a lower signal to noise ratio which may lead to the perception algorithm misidentifying driver and occupant states and behavior.

### BRIEF SUMMARY

It is with respect to the above issues and other problems that the embodiments presented herein were contemplated. It is an aspect of the present disclosure to control NIR LEDs to turn on and output light to a scene (e.g., an interior cabin of a vehicle, etc.) for a time duration when the image sensor is capturing/exposing the scene. The NIR LEDs may remain off for the rest of the time.

Depending on the image sensor integration time (exposure time), the NIR LEDs may remain on for a fraction of the time of conventional systems while providing sufficient illumination for the scene when useful. In one example, LEDs may turn on for about 5% of the time compared to conventional continuous illumination systems. However, embodiments of the present disclosure are not limited thereto and the amount or percentage of on-time for the LEDs may be smaller or greater depending on duty cycle of the signal driving the LEDs and/or depending on other design parameters.

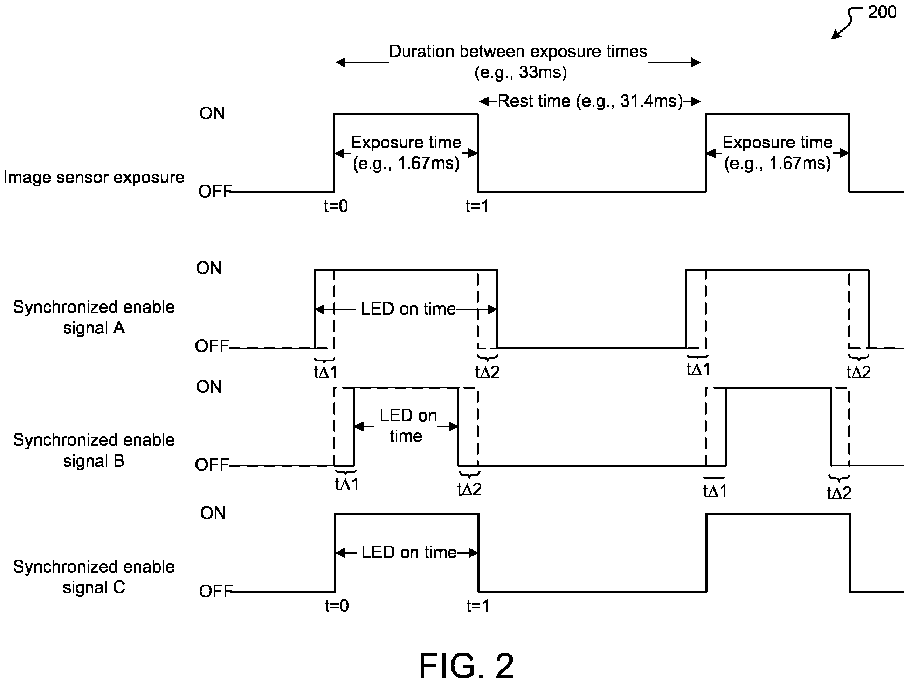

In various embodiments, an electrical signal, such as an enable signal, may be sent from the image sensor to the NIR LED driver that represents the state of the sensor's exposure. In some embodiments, the enable signal is synchronized with the signal that controls the exposure times of the image sensor so that when, or slightly before or after, the image sensor begins the exposure of the scene, the enable signal may activate the LED driver to drive the NIR LEDs to output light for scene illumination. When, or slightly before/after, the image sensor stops the exposure of the scene, the enable signal deactivates the LED driver, turning off the NIR LEDs to conserve power (see Fig. 2, for example). The leading or trailing time can be adjusted to compensate for latency in the LED or the image sensor.

At least some of the benefits of the methods and systems described herein include, but are in no way limited to, at least one of allowing greater peak power to NIR LEDs providing a greater level of illumination without increasing power consumption, improved thermal performance (e.g., since the LEDs may be off, for example, for 95% of the total time and considering that LEDs are a primary consumer of electrical power in a vision system, such as, a driver monitoring system), lowering thermal dissipation that results in improved Signal to Noise (SNR) ratio of the video from the image sensor at a given temperature, improved power efficiency, increasing lifespan of NIR LEDs used in vision systems, and/or the like.

As can be appreciated, the synchronous operation of the LEDs may have a wide demand in a number of applications and implementations. For instance, the automotive industry may greatly benefit from the synchronous operation of LEDs described herein where safety and reliability are of paramount concern and where power savings and thermally efficient designs are highly valued.

The preceding is a simplified summary of the disclosure to provide an understanding of some aspects of the disclosure. This summary is neither an extensive nor exhaustive overview of the disclosure and its various aspects, embodiments, and configurations. It is intended neither to identify key or critical elements of the disclosure nor to delineate the scope of the disclosure but to present selected concepts of the disclosure in a simplified form as an introduction to the more detailed description presented below. As will be appreciated, other aspects, embodiments, and configurations of the disclosure are possible utilizing, alone or in combination, one or more of the features set forth above or described in detail below.

Numerous additional features and advantages are described herein and will be apparent to those skilled in the art upon consideration of the following Detailed Description and in view of the figures.

### BRIEF DESCRIPTION OF THE DRAWINGS

The accompanying drawings are incorporated into and form a part of the specification to illustrate several examples of the present disclosure. These drawings, together with the description, explain the principles of the disclosure. The drawings simply illustrate preferred and alternative examples of how the disclosure can be made and used and are not to be construed as limiting the disclosure to only the illustrated and described examples. Further features and advantages will become apparent from the following, more detailed, description of the various aspects, embodiments, and configurations of the disclosure, as illustrated by the drawings referenced below.
Fig. 1 shows a block diagram of a vision system in accordance with examples of the present disclosure.
Fig. 2 shows schematic waveform timing diagrams for the vision system in accordance with an example of the present disclosure.
Figs. 3A to 3C are flow diagrams of methods for operating the vision system in accordance with examples of the present disclosure.
Fig. 4 illustrates a variation of the system in Fig. 1 in accordance with examples of the present disclosure.
Fig. 5 illustrates a variation of the system in Fig. 1 in accordance with examples of the present disclosure.
Fig. 6 illustrates a variation of the system in Fig. 1 in accordance with examples of the present disclosure.
Fig. 7 illustrates a variation of the system in Fig. 1 in accordance with examples of the present disclosure.
Fig. 8 illustrates a variation of the system in Fig. 1 in accordance with examples of the present disclosure.

### DETAILED DESCRIPTION

Before any embodiments of the disclosure are explained in detail, it is to be understood that the disclosure is not limited in its application to the details of construction and the arrangement of components set forth in the following description or illustrated in the drawings. The disclosure is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Further, the present disclosure may use examples to illustrate one or more aspects thereof. Unless explicitly stated otherwise, the use or listing of one or more examples (which may be denoted by "for example," "by way of example," "e.g.," "such as," or similar language) is not intended to and does not limit the scope of the present disclosure.

The ensuing description provides embodiments only, and is not intended to limit the scope, applicability, or configuration of the claims. Rather, the ensuing description will provide those skilled in the art with an enabling description for implementing the described embodiments. It being understood that various changes may be made in the function and arrangement of elements without departing from the spirit and scope of the appended claims.

Various aspects of the present disclosure will be described herein with reference to drawings that may be schematic illustrations of idealized configurations.

Vision systems, including monitoring systems (e.g., in-cabin camera systems that monitor the state of a driver through facial recognition) is an emerging technology. Most monitoring systems may need to operate without relying upon environmental or ambient light sources. For instance, in driver monitoring systems for a vehicle (e.g., autonomous vehicle, etc.) it may be required that in-cabin cameras be capable without any source of external light from the environment (e.g., during the night or other low-light level conditions). Most visions systems, including driver or occupant monitoring systems, typically employ one or more light emitting diodes (LEDs) (e.g., NIR LEDs, etc.) to actively illuminate the subject and interior of the vehicle cabin when being imaged by an imaging system (e.g., camera or other image sensor, etc.). Conventional systems, however, may flood illuminate a subject with these LEDs, which may require the LEDs to continuously operate, or operate for long periods of time. When operated for long periods of time at maximum duty cycle, NIR LEDs can generate significant amounts of heat, reducing the system's ability to operate at a higher ambient operating temperature point, increasing electrical power consumption, limiting the peak light output required by the imaging system, and/or reducing the lifespan of NIR LEDs. As a result, special packaging is required to house NIR LEDs, especially when used inside vehicles. Without special packaging (e.g., incorporating heat sinks, heat resistant materials, and athermalized designs, etc.), the NIR LEDs may generate enough heat to fail non-passively, and could also lead to the melting of certain enclosure materials at high operating temperature points. The increase in power consumption reduces vehicle efficiency. Also, increased operating temperatures and the decrease in peak light output results in images that have a lower signal to noise ratio which may lead to the perception algorithm misidentifying driver and occupant states and behavior.

It is with respect to the above issues and other problems that the embodiments presented herein were contemplated.

It is an aspect of the present disclosure to provide a control of NIR LEDs that turn on and output light to illuminate a scene (e.g., an interior cabin of a vehicle, etc.) for a time duration when the image sensor is capturing/exposed to the scene. The NIR LEDs may remain off for the rest of the time.

The synchronous operation of the LEDs described herein offers a number of benefits and advantages over conventional systems. For instance, the vision system described herein allows greater peak power to NIR LEDs providing a greater level of illumination without increasing power consumption, and in some cases, while reducing power consumption. In addition, an LED may be allowed to have a more concentrated current flow for a short period of time (e.g., a short duty cycle) without exceeding the Permissible Pulse Handling Capability characteristics of typical LEDs available today. The operational region of the vision system may allow a greater amount of current to be pushed through the LEDs for a relatively shorter duration.

Additionally or alternatively, the vision system may improve thermal performance and power efficiency compared to conventional systems as the LEDs may be off for 95% of the total time, which contrasts with conventional systems that require the LEDs to be on for 100% of the time. With reference to the following non-limiting specific examples, a vision system may have an LED with a 5.79 V volage drop driven at 2.93 A and an image sensor with an exposure time of 1.67ms at a frame rate of 30 frames per second, system power consumption = 5.79 V * 2.93 A* 1.67 ms/33.33 ms = 0.85 W. In contrast, a conventional system requiring continuous flood illumination with LEDs having a 5.5V voltage drop driven at a lower current of 1.5 A and with an image sensor having an exposure time of 1.67ms, system power consumption = 5.5 V * 1.5 A* 33.33 ms/33.33 ms = 8.25 W. As can be appreciated, the pulse width modulation (PWM) synchronous operation method described herein may use about 90% less power at an LED's maximum drive potential. This reduced power consumption translates to proportionally decreased thermal dissipation inside of the enclosure housing the image sensor and/or the LEDs. Another benefit is increased lifespan of the LEDs (e.g., NIR LEDs). Since LED lifespan may be a function of current, operating temperature, and duty cycle, reducing the duty cycle increases the lifespan of the LEDs. Additionally or alternatively, the lower thermal dissipation also improves Signal to Noise (SNR) ratio of the video from the image sensor at a given temperature, especially if the image sensor is packaged in the same enclosure as the LEDs. As the operating temperature of an image sensor increases, the SNR may decrease. By maintaining the temperature of the LEDs and the image sensor at a lower operating temperature, the SNR is improved/increased.

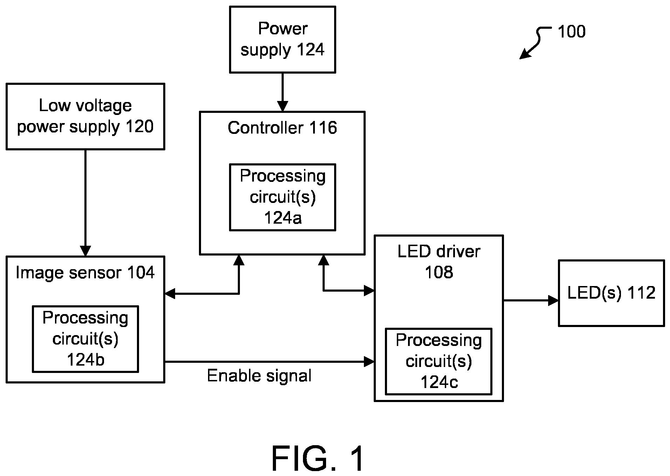

Referring now to Fig. 1, a block diagram of a vision system 100 is shown in accordance with examples of the present disclosure. The vision system 100 may include at least one image sensor 104, an LED driver 108, and one or more LEDs or light sources 112. In some examples, a controller (e.g., a processor, microcontroller, etc.) 116 may be included. The controller 116 may control operation of the image sensor 104 and/or the LED driver 108 in a synchronous manner. The vision system 100 may include one or more power supplies 120 and 124 that are capable of providing power (e.g., AC and/or DC power) to the image sensor 104, the LED driver 108, the LED(s) 112, and/or the controller 116. One specific non-limiting example of a vision system 100 is a driver monitoring system that monitors a driver and/or other occupants of a vehicle. However, the vision system 100 has other suitable applications, such as any application that uses light, whether in the visible spectrum or the nonvisible spectrum, to illuminate a scene.

In any event, the image sensor 104 may correspond to any suitable sensor that is capable of detecting and conveying data used to create an image (e.g., a charge-coupled device (CCD), a complementary metal-oxide semiconductor (CMOS), and/or some other imager). The image sensor 104 may capture two dimensional (2D) and/or three dimensional (3D) images. For example, the image sensor 104 may be controlled to capture a 2D image for the purpose of determining the distance between a vehicle occupant's eyes, the length of the occupant's nose, and/or determining other features of the occupant that distinguish the occupant from other occupants. In at least one other example, the image sensor 104 captures 3D images (e.g., depth images) that capture the contours of objects in a scene. Additionally or alternatively, the image sensor 104 may be used to track eyes of an occupant to, for example, detect the occupant's gaze or level of attentiveness.

In at least one embodiment, the image sensor 104 may operate according to direct time-of-flight (ToF) or indirect ToF principles. Direct ToF systems may calculate distance to an object based on the round trip time of a light pulse sent from the LED(s) 112 and reflected from an object back to the image sensor 104 (i.e., distance = (c x t)/2, where c is the speed of light and t is the round trip time of the light pulse). Meanwhile, indirect ToF systems may emit a continuous wave of light over a defined time period and calculate distance to an object based on the phase difference between the outgoing and incoming light waves. The image sensor 104 may comprise one or more pixels each having a corresponding photoelectric conversion region (e.g., a photodiode) that converts light into electric charge. In at least one example, the image sensor 104 includes one or more single photon avalanche diodes (SPADs) or other suitable light detectors. One specific but non-limiting example of an image sensor 104 is a CMOS digital image sensor with active pixel array such as the ¼-inch 1.0 Mp CMOS digital image sensor with global shutter model number AR0144AT manufactured by ON Semiconductor^{®}, and/or the like.

The LED(s) 112 may comprise a single LED or an array of LEDs arranged in a matrix. The LED(s) 112 may output light in the infrared spectrum or near infrared spectrum. In some examples, an LED 112 may correspond to an NIR LED such as the IR high efficiency light-source model number SFH 4727AS manufactured by OSRAM Opto Semiconductors. However, example embodiments are not limited to infrared LED(s) 112, and the LED(s) 112 may output light within the visible spectrum. In any case, the LED(s) 112 may output light that provides the illumination required for the image sensor 104 to capture a scene and generate image data. The LED(s) 112 may be collocated with the image sensor 104 (i.e., oriented in a substantially same plane) and/or located at some known distance away from the plane of the image sensor 104 so that distance measurements to an object are accurate. In some examples, other types of light sources are used instead of LED(s) 112.

The controller 116 may include one or more processing circuits 124a for carrying out computing tasks, for example, tasks associated with controlling the image sensor 104 and/or the LED driver 108. Such processing circuits 124a may comprise software, hardware, or a combination thereof. For example, a processing circuit 124a may include a memory including executable instructions and at least one processor (e.g., a microprocessor) that executes the instructions on the memory. The memory may correspond to any suitable type of memory device or collection of memory devices configured to store instructions. Non-limiting examples of suitable memory devices that may be used include Flash memory, Random Access Memory (RAM), Read Only Memory (ROM), variants thereof, combinations thereof, or the like. In some embodiments, the memory and processor may be integrated into a common device (e.g., a microprocessor may include integrated memory). Additionally or alternatively, a processing circuit 124a may comprise hardware, such as an application specific integrated circuit (ASIC). Other non-limiting examples of the processing circuits 124a include an Integrated Circuit (IC) chip, a Central Processing Unit (CPU), a microprocessor, a Field Programmable Gate Array (FPGA), a collection of logic gates or transistors, resistors, capacitors, inductors, diodes, or the like. Some or all of the processing circuits 124a may be provided on a Printed Circuit Board (PCB) or collection of PCBs. It should be appreciated that any appropriate type of electrical component or collection of electrical components may be suitable for inclusion in the controller 116.

Similarly, the image sensor 104 and the LED driver 108 may include one or more processing circuits 124b and 124c, respectively. The processing circuit(s) 124b and 124c may have the same or similar structure(s) as the processing circuit(s) 124a to enable functionality for the image sensor 104 and LED driver 108 related to generating an enable signal and activating and deactivating LED(s) 112 in accordance with embodiments of the present disclosure. The image sensor 104, the controller 116, and/or the LED driver 108 may additionally comprise memory to store information and/or instructions that are executed by the one or more processing circuits 124a, 124b, 124c.

In some examples, an enable signal is sent from the image sensor 104 to the LED driver 108 when the image sensor 104 takes an image of a scene (e.g., an interior of a vehicle cabin). The enable signal causes the LED driver 108 to drive and turn on the LED(s) 112 in accordance with pulses of the enable signal. Fig. 1 illustrates an example where the image sensor 104 sends the enable signal to the LED driver 108. However, example embodiments are not limited thereto, and the controller 116 may send the enable signal to the LED driver 108 instead of the image sensor 104. The LED driver 108 may include one or more suitable circuits for driving the LED(s) 112, which may be part of the processing circuit(s) 124c. The LED driver 108 may include a power regulation circuit that regulates power provided to the LED(s) 112 in accordance with known electrical characteristics of the LED(s) 112 (e.g., an LED's forward voltage). As described herein, when the image sensor 104 is activated and caused to expose (capture a scene), a corresponding enable signal may be simultaneously sent to the LED driver 108 that causes the LED(s) 112 to output light in an environment the image sensor 104 is capturing. For example, the enable signal may drive the LED driver 108 to cause the LED(s) 112 to output light in synchronization with an exposure time of the image sensor 104 during which pixels of the image sensor 104 collect light (e.g., IR light) from a scene. The exposure time may be controlled with or without the involvement of a mechanical shutter that exposes and covers pixels of the image sensor 104. The image sensor 104 may operate according to global shutter principles or rolling shutter principles.

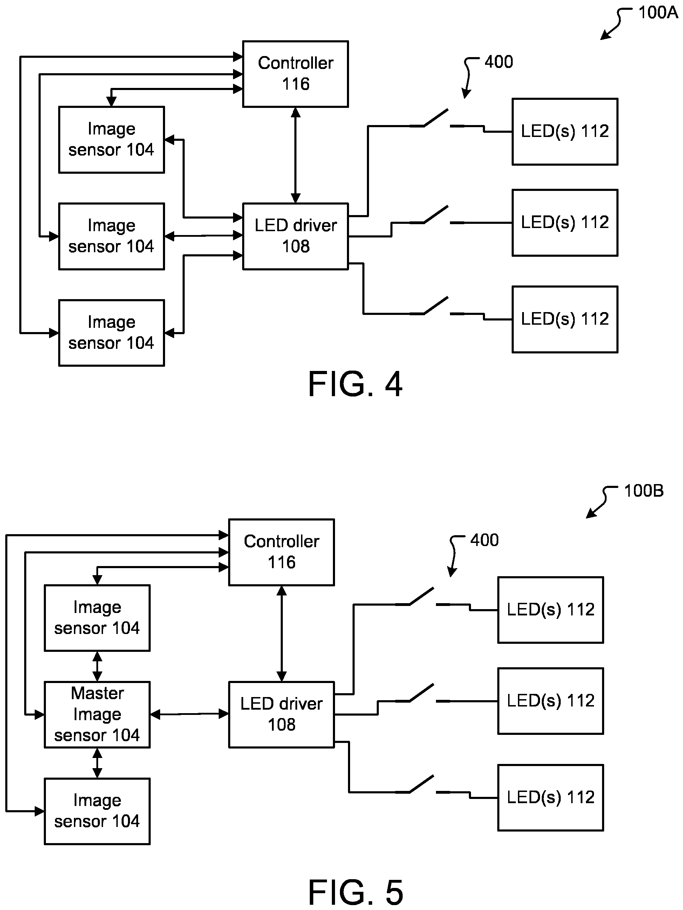

In at least one embodiment, the enable signal that triggers LED driver 108 to turn on the LED(s) 112 may be sent to multiple LED drivers 108, for example, where the environment includes multiple distinct image sensors 104, LED drivers 108, and/or LED(s) 112. In some examples, the exposure times of image sensors 104 are synchronized with one another so that the image sensors 104 capture respective scenes at the same time. Here, a single enable signal may be sent from one "master" image sensor 104 (or from the controller 116) to all LED drivers 108 or to selected LED drivers 108. In this case, each LED driver 108 may be electrically connected to the master image sensor 104 and/or the controller 116. In another example, each image sensor 104 (or the controller 116) generates a respective enable signal for each LED driver 108. These and other possibilities are described in more detail below with reference to Figs. 4-8.

In addition, an image sensor 104 and/or the controller 116 may be capable of selecting which LED drivers 108 to enable. In other words, the LED drivers 108 may be addressable by the image sensor 104 and/or the controller 116 through a suitable method, such as switches that are turned on and off according to which LED drivers 108 are intended to be enabled, enable signals that are encoded by the controller 116 and/or the image sensor 104 and decodable by only those LED drivers 108 intended to be enabled, and/or the like. In the context of occupant monitoring, a vehicle environment may include occupants in addition to the driver, and a single image sensor 104 or multiple image sensors 104 may monitor the driver and one or more other occupants. The system 100 may be monitoring occupants for different conditions depending on where the occupant is seated (e.g., attentiveness for a driver vs. disruptive behavior by a passenger). Thus, in some cases, it may be useful for the system to distinguish between occupants. In the single image sensor scenario and the multiple image sensor scenario, the system 100 may include multiple LED drivers 108 and multiple sets of LED(s) 112 with each set of LED(s) being associated with a respective occupant or occupants and, in some cases, emitting light at a different wavelength or range of wavelengths (see Figs. 4-8 and related text).

In the case of a single image sensor 104 that monitors multiple occupants, the image sensor 104 may include pixels that detect each wavelength or range of wavelengths so that the single image sensor 104 can distinguish which occupant is being monitored based on the different wavelength or range of wavelengths detected by the image sensor 104. To accomplish this, the single image sensor 104 may include some pixels with a bandpass filter that passes light in a first wavelength range, some pixels with a bandpass filter that passes light in second wavelength range that does not overlap with the first wavelength range, and so on for the number of wavelength ranges emitted by the different sets of LED(s) 112. In the case of multiple image sensors 104, each image sensor 104 may sense light in a different wavelength range compared to other image sensors 104 in order to distinguish which occupant is being monitored.

In the single image sensor case and the multiple image sensor case in a system with multiple LED drivers 108 and corresponding LED(s) 112, each LED driver 108 may be enabled sequentially so that only one set of LED(s) 112 is on while others are off to reduce the risk of interference between sets of LED(s) 112 (e.g., in cases where each image sensor 104 senses a same range of wavelengths). In at least one embodiment, however, a single LED driver 108 may be used to drive multiple different sets of LED(s) 112. In this case, multiple branches of LED(s) 112 may be coupled to and decoupled from a single driver 108 through respective electronic switches (e.g., transistors) that are switched according to control signals from the controller 116 and/or an image sensor 104 (see Figs. 4, 5, and 7).

In at least one other example, the act of enabling a selected LED driver to turn on associated LED(s) 112 may be used to distinguish between occupants of a vehicle. With reference to the example of a system with a single image sensor 104 and multiple sets of LED(s) 112, each different set of LED(s) 112 may be associated with a different occupant or set of occupants. For example, first set of LED(s) 112 may be located in a position for monitoring the driver of a vehicle while a second set of LED(s) 112 may be located in a position for monitoring a backseat passenger. Enabling the LED driver 108 associated with the first set of LED(s) 112 indicates to the system that the driver is being monitored while enabling the LED driver 108 that drives the second set of LED(s) 112 indicates that the backseat passenger is being monitored. Thus, the act of turning on a particular set of LED(s) 112 enables the system to know which occupant is being monitored.

Although example embodiments have been described with reference to controlling the on/off states of LED(s) 112 with an enable signal that is synchronized to an exposure time of an image sensor 104, it should be appreciated that the enable signal may also be used to trigger an exposure time of an image sensor 104. For example, the controller 116 may send a same enable signal to an image sensor 104 and an LED driver 108 to simultaneously trigger an exposure time for the image sensor 104 and turn on LED(s) 112. In this case, the controller 116 may be executing one or more algorithms that determine the timing of when to send the enable signal to the image sensor 104 and LED driver 108 (e.g., send the enable signal at regular intervals, at irregular intervals, only when deemed useful, etc.). In at least one embodiment, the enable signal triggers an exposure time for the image sensor 104, which in turn triggers the image sensor 104 to send another enable signal to the LED driver 108 to turn on LED(s) 112.

In another embodiment, the signal that controls the exposure time of the image sensor 104 is also sent to the driver 108 as the enable signal. For example, a signal generator that generates a signal for controlling the exposure time of the image sensor 104 may be hardwired to two communication paths - one path that leads to the image sensor 104 and one path that leads to the driver 108. In at least one example, the signal that controls the exposure time of the image sensor 104 may be fed into a delay circuit in one of the paths before reaching the image sensor 104 or before reaching the driver 108 so that the exposure times and the pulses of the signal driving the driver 108 partially overlap. In some cases, the signal that controls the exposure time of the image sensor 104 is separately duplicated and sent to the LED driver 108 as the enable signal.

In one example, the LED(s) 112 may be caused to activate (e.g., turn on) in advance of a start of an exposure time of the image sensor 104. Additionally or alternatively, the LED(s) 112 may be caused to deactivate (e.g., turn off) after an end of an exposure time of the image sensor 104. Among other things, this approach may ensure that the environment is fully illuminated by the LED(s) 112 during the exposure time so that image data associated with the environment is collected by the image sensor 104. Fig. 2 and related text describe synchronizing an enable signal to exposure times of the image sensor 104 in further detail.

Fig. 2 shows schematic waveform timing diagrams 200 in accordance with an example of the present disclosure. In some embodiments, sensor exposure times may be in relation to three different synchronized enable signals A, B, and C. The enable signals A, B, and C may be synchronized with the exposure times by the one or more processing circuits 124a or 124b. In the example of Fig. 2, the image sensor 104 of the vision system 100 takes 30 pictures per second. In other words, a picture of the environment may be taken once approximately every 33 milliseconds (ms). As shown in Fig. 2, the exposure time of the image sensor 104 corresponds to approximately 1.67 ms out of every 33 ms duration (waveforms not to scale for the sake of clear illustration). Accordingly, rather than maintain the LED(s) 112 in an "always on" condition like conventional flood illuminated systems, the vision system 100 described herein may selectively activate, or turn on, the LED(s) 112 while the picture is being taken. With reference to the specific example above, the LED(s) 112 may be caused to turn "on" for 1.67 ms and then turn "off" for the remainder of the 33 ms (e.g., allowing the LED(s) 112 to remain off, or at rest, for approximately 31.4 ms), which translates to the LED(s) 112 using less power than conventional systems. The 31.4 ms time period may be referred to herein as a "rest time." This synchronization of the LED(s) 112 on-time to image sensor 104 exposure time may repeat continuously. Example embodiments are not limited to the exposure time length and exposure frequency noted above and these values may vary depending on design.

Fig. 2 illustrates three options for enable signals A, B, and C that are synchronized differently to exposure times of an image sensor 104. Any one of the enable signals A, B, and C may be used to drive the LED driver 108 for turning on and off LED(s) 112. Fig. 2 illustrates enable signals A and B with the exposure time overlaid in dashed lines. Accordingly, as shown, the LED on times are synchronized with the ON duration of each enable signal A, B, and C while the LED off times are synchronized with the OFF duration of each enable signal A, B, and C. Stated another way, it should be appreciated that the LED 112 on/off times match or closely match the timing shown for enable signals A, B, and C in Fig. 2 (e.g., the enable signal is driven high just before the desired beginning of LED illumination and driven low just before the desired end of LED illumination to account for signal transmission latencies). The enable signals A, B, and C may be generated in a predictive or a reactive fashion by the image sensor 104 or the controller 116. For example, the image sensor 104 and/or the controller 116 may generate the enable signals A, B, and C predictively according to information stored in memory that provides the image sensor's 104 exposure time length and frequency. Alternatively, the image sensor 104 and/or the controller 116 may generate the enable signals A, B, and C reactively upon being notified or upon detecting that an exposure time has begun or is about to begin.

As illustrated by enable signals A and B, the LED(s) 112 are caused to turn on before or after the start of an exposure time of the image sensor 104. For instance, the Δt1 for an enable signal may be a negative time displacement or a positive time displacement from t=0 (e.g., the start of image sensor exposure). Negative time displacement may correspond to an amount of time subtracted from the time of the start of an exposure time and positive time displacement may correspond to an amount of time added to the start of an exposure time. Enable signal A illustrates Δt1 as a negative time displacement, where the LED(s) 112 are caused to turn on before the image sensor 104 begins the start of exposure. Among other things, this approach may allow the LED(s) 112 to output a full, or desired threshold, level of brightness at the time the image sensor 104 begins to detect. Meanwhile, enable signal B illustrates Δt1 as a positive time displacement from the start of an exposure time, meaning that the image sensor 104 may begin exposing before the LED(s) 112 turn on.

Additionally or alternatively, the LED(s) 112 may be caused to turn off before or after the end of an exposure time of the image sensor 104. For instance, enable signals A and B illustrate Δt2 as a negative time displacement or a positive time displacement from the end of an exposure time of the image sensor 104 exposure. Negative time displacement may correspond to an amount of time subtracted from the time of the end of an exposure time and positive time displacement may correspond to an amount of time added to the time of the end of an exposure time. Enable signal B illustrates Δt2 as a negative time displacement, where the LED(s) 112 are caused to turn off before the image sensor 104 ends exposure. Meanwhile, enable signal A illustrates Δt2 as a positive time displacement from the end of an exposure time causing the LED(s) 112 to continue illuminating even after the image sensor 104 has ceased exposing. Where Δt1 corresponds to a negative time displacement and Δt2 corresponds to a positive time displacement (as with enable signal A), the scene captured by the image sensor 104 is guaranteed to be illuminated by the LED(s) 112.The timing shown for the enable signals A, B, and C may be combined in any suitable manner. For example, an enable signal may use Δt1 of enable signal A and Δt2 of enable signal B, or any other combination of timings shown in Fig. 2.

It should be appreciated that Δt1 and Δt2 may be design parameters set based on empirical evidence and/or preference. In general, the maximum durations of Δt1 and Δt2 are determined by the following equation: T- Δtd = Δt1 + Δt2, where T = 1/frame rate (e.g., 30 frames per second) and where Δtd = duration of an exposure time (e.g., in a range of 1.6ms to 6ms). Stated another way, Δt1 and Δt2 should adhere to the following: Δt1 ≤ T - Δtd - Δt2, and Δt2 ≤ T - Δtd - Δt1. Durations of Δt1 and Δt2 may each be a few microseconds (e.g., between 2-5 microseconds). In some embodiments, Δt1 and Δt2 span a same amount of time (e.g., 3 microseconds). In other embodiments, Δt1 and Δt2 span different amounts of time. Δt1 and Δt2 may have static values that stay the same over time or variable values that change over the course of time (e.g., Δt1 and Δt2 may be adjusted based on historical performance information). In yet other embodiments, Δt1 and Δt2 are equal to zero as shown for enable signal C (i.e., there is no time displacement and the LED(s) 112 turn on at a substantially same time as the beginning of an exposure time and turn off at a substantially same time as the end of the exposure time).

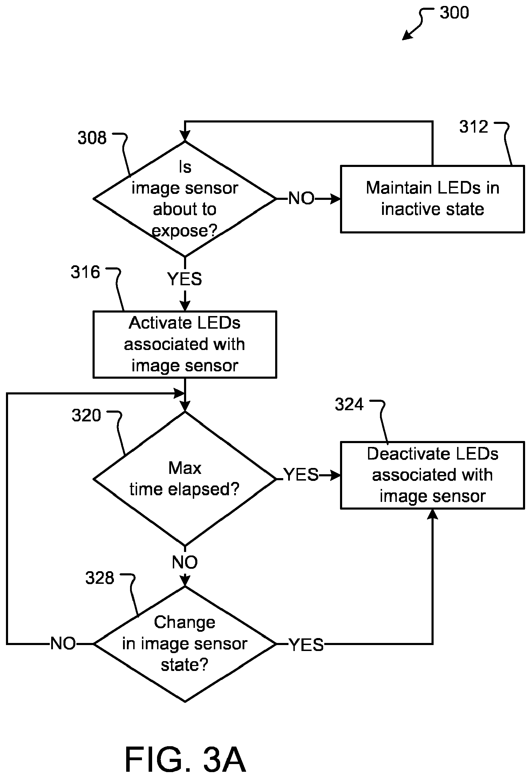

Fig. 3A is a flow diagram of a method 300 for operating the LED(s) 112 in a synchronous operation with an image sensor 104 of a vision system 100 in accordance with examples of the present disclosure. While a general order for the steps of the method 300 is shown in Fig. 3A, the method 300 can include more or fewer steps or can arrange the order of the steps differently than those shown in Fig. 3A. The method 300 can be executed as a set of computer-executable instructions encoded or stored on a computer readable medium and executed by the controller 116 and/or image sensor 104. Alternatively, the operations discussed with respect to Fig. 3A may be implemented by the various elements of the system(s) Figs. 1-2. Hereinafter, the method 300 shall be explained with reference to the systems, components, assemblies, devices, environments, software, etc. described in conjunction with Figs. 1-2.

In one example, the controller 116 (shown in Fig. 1) may operate at least one of the image sensor 104 and the LED driver 108. The method 300 may begin by determining whether the image sensor 104 is about to integrate or expose (i.e., capture a scene) in operation 308. This determination may correspond to one or more processing circuits (e.g., 124b) receiving a notification indicating that the image sensor 104 is about to actively capture/integrate images. In one example, the notification is sent to the image sensor 104 by the controller 116. The notification may also be indicative of a length of an exposure time for the image sensor 104 and/or a frequency at which exposure times should occur. In at least one example, the notification programs the image sensor 104 with a length(s) of an exposure time(s) and a rate(s) at which the exposure time(s) should occur. In this case, the determination in operation 308 may be made based on operation of an internal timer of the image sensor 104 that tracks exposure times and exposure frequency as programmed. Alternatively, operation 308 includes the one or more processing circuits determining that the image sensor 104 is already exposing and proceeds to operation 316. If the image sensor 104 is not exposing or about to expose, the method 300 may maintain the LED(s) 112 in an inactive (off) state in operation 312 before the method returns to checking for the determination in operation 308.

In the event that the image sensor 104 is determined to be integrating or is about to integrate in operation 308, the method 300 may proceed to activate (turn on) at least one LED 112 associated with the image sensor 104 in operation 316. In some examples, this activation may correspond to sending an enable signal (e.g., enable signal A, B, or C from Fig. 2) to an LED driver 108 that causes the LED(s) 112 to output light (e.g., infrared light). In one example, the LED(s) 112 may be allowed to operate for a maximum amount of time before being caused to turn off. Thus, operation 320 determines whether the maximum amount of time has elapsed. In one example, this maximum amount of time may correspond to an amount of exposure time (or duration of an exposure time or an amount of integration time) for the image sensor 104. Alternatively, the maximum amount of time may correspond to a predetermined and preset amount of time for the LED(s) 112 to continuously output light. If the maximum amount of time has elapsed, the method 300 may deactivate the LED(s) 112 in operation 324 by, for example, setting the enable signal to low state.

In some examples, the method may determine if there is a change in state of the image sensor 104 in operation 328. For example, the method 300 may determine if the image sensor 104 is on (activated state) or off (inactivated state). If the image sensor 104 changes from the activated state to the inactivated state, the method 300 may proceed to deactivate the LED(s) 112 in operation 324. Otherwise, the method 300 may continue to maintain the LED(s) 112 in an activated (e.g., on) state.

In some cases, operation 328 may be performed alone without first progressing through the remainder of the method 300. Here, the state of the image sensor 104 may be controlled by some external element and/or based on an external factor, such as an operating state of the vehicle. For example, operation 328 may determine that the vehicle is in a degraded state of operation (e.g., low battery or low fuel) and shut down non-essential components of the vehicle, such as the image sensor 104. If the image sensor 104 changes from the activated state to the inactivated state as a result of an external factor like a malfunction of the vehicle, the method 300 may proceed to deactivate the LED(s) 112 in operation 324 until the image sensor 104 is reactivated (e.g., as a result of the malfunction being resolved).

As illustrated in Fig. 1, the LED driver 108 may be hard linked to the image sensor 104. As the image sensor 104 operates (e.g., enters and exits exposure times), an enable signal may be sent from the image sensor 104 directly to the LED driver 108. This hard link between the image sensor 104 and the LED driver 108 ensures that the operation of the LED(s) 112 is synchronized with the exposure times of the image sensor 104. Additionally or alternatively, a hard link is between the LED driver 108 and a controller 116, meaning that the controller 116 may send the enable signal to the LED driver 108.

In some examples, the LED(s) 112 may be operated at an increased current resulting in an increased light intensity and light output. Since an LED 112 is operated for a fraction of the time of conventional flood lighting, the current provided to the LED 112 during the limited operation time (e.g., the exposure time of the image sensor) may be increased to provide increased illumination. This approach may be especially beneficial when collecting more information inside a vehicle (e.g., during autonomous driving, or partially autonomous driving, modes, accidents, emergency situations, etc.).

As may be appreciated, Fig. 3A shows an example of operating of the vision system 100 in a mostly reactive fashion (e.g., the enable signal is triggered for each exposure time without prior knowledge of exposure time length and/or frequency). However, it should be appreciated that other methods may be used, such as a mostly predictive method where the pulses of an enable signal are synchronized to exposure times of the image sensor 104 using prior knowledge of exposure time length and/or frequency.

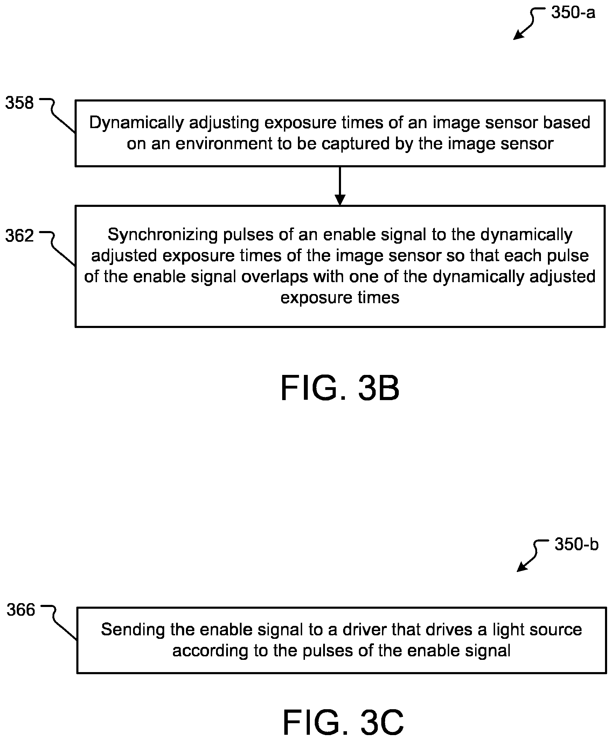

Figs. 3B and 3C are flow diagrams of methods 350-a and 350-b for operating the vision system 100 in accordance with examples of the present disclosure. While a general order for the steps of the methods 350-a and 350-b is shown in Figs. 3B and 3C, the methods 350-a and 350-b can include more or fewer steps or can arrange the order of the steps differently than those shown in Figs. 3B and 3C. The methods 350-a and 350-b can be executed as a set of computer-executable instructions encoded or stored on a computer readable medium and executed by the controller 116 and/or image sensor 104. Alternatively, the operations discussed with respect to Figs. 3B and 3C may be implemented by the various elements of the system(s) Figs. 1-2. Hereinafter, the methods 350-a and 350-b shall be explained with reference to the systems, components, assemblies, devices, environments, software, etc. described in conjunction with Figs. 1-2.

Operation 358 includes dynamically adjusting exposure times of an image sensor 104 based on an environment to be captured by the image sensor 104. Operation 358 may be carried out by the image sensor 104 or the controller 116. The exposure time length and/or frequency may be dynamically adjusted based on a time-of-day of the surrounding environment (e.g., night mode, day mode, etc.). For example, the image sensor 104 may use longer exposure times for images taken in a dark environment (night mode) than for images taken in a lighter environment (day mode). The image sensor 104 and/or the controller 116 may detect an amount of ambient light in the environment from an image taken by the image sensor 104 and correlate the amount of ambient light to a predetermined exposure time length and/or frequency associated with the detected amount of ambient light (e.g., with the aid of a lookup table that associates amounts of ambient light to exposure time lengths and/or frequency). In another example, exposure time lengths and/or frequency are dynamically adjusted according to the type of environment being monitored. For example, exposure times may be adjusted to be more frequent for monitoring a driver of a vehicle compared to exposure time frequency for monitoring a passenger of the vehicle other than the driver to keep closer tabs. Similarly, exposure times may be adjusted to be more frequent for monitoring an exterior of a vehicle versus monitoring an interior of the vehicle to account for the fact that the exterior environment changes more rapidly than the interior environment during vehicle movement.

Dynamically adjusting the exposure times in operation 358 may be triggered in response to detecting a change in mode of the image sensor 104. For example, in a high dynamic range (HDR) mode of the image sensor 104, the exposure times are automatically adjusted to lengths and/or frequencies used for capturing an HDR image which may be formed by combining multiple images taken with different exposure time lengths. Similarly, entering a night mode to capture images in a dark environment may trigger the image sensor 104 to automatically adjust the exposure time lengths to be longer compared to exposure time lengths for day mode.

Operation 362 includes synchronizing pulses of an enable signal to the dynamically adjusted exposure times of the image sensor 104 from operation 358 so that each pulse of the enable signal overlaps with one of the dynamically adjusted exposure times. For example, the image sensor 104 comprises a signal generator (e.g., included in one of the processing circuit(s) 124b) that generates one of the enable signals described above with reference to Fig. 2. Each time the exposure time length or frequency is adjusted for the image sensor 104, the signal generator may be informed of the change and resynchronize the enable signal to the newly adjusted exposure times. In another example, the signal that controls exposure of the image sensor 104 (i.e., an electronic signal that matches the image sensor exposure times depicted in Fig. 2) is duplicated as the enable signal or, in yet another example, also sent to the driver 108 in addition to the mechanism (e.g., a mechanical or electronic shutter) that controls exposure of the image sensor 104.

As noted above in the discussion of Fig. 2, the pulses of the enable signal may at least partially overlap with the exposure times to turn on the LED(s) 112 via the driver 108. For example, the pulses of the enable signal are synchronized to the dynamically adjusted exposure times with a negative time displacement, a positive time displacement, or both. As shown in Fig. 2, the negative time displacement is with respect to a beginning or an end of a pulse of the enable signal. Similarly, the positive time displacement is with respect a beginning or an end of a pulse of the enable signal (see enable signals A and B). In another example, the pulses of an enable signal substantially match the exposure times of the image sensor (see enable signal C).

Here, it should be appreciated that operation 358 may alternatively determine exposure time length(s) and/or frequency in a static fashion (i.e., not dynamically). Stated another way, the exposure times of the image sensor 104 are not necessarily dynamically determined based on the environment and/or mode of the image sensor 104. Instead, the exposure time lengths and/or frequency may have static values that do not regularly change based on the environment. In this case, operation 362 synchronizes the enable signal to the exposure times that have static values so that each pulse of the enable signal overlaps with one of the static exposure times.

Operation 366 includes sending the enable signal to a driver 108 that drives a light source, such as the LED(s) 112, according to the pulses of the enable signal. The enable signal may be sent to the driver 108 over a suitable wired connection (e.g., a copper trace).

As may be appreciated, the methods 350-a and 350-b may be performed by a single entity, such as the image sensor 104 or the controller 116. In some examples, however, the methods 350-a and 350-b are performed by a combination of the image sensor 104 and controller 116. Where there are multiple image sensors 104 with different exposure time lengths and/or frequencies, multiple instances of the methods 350-a and 350-b may be performed simultaneously for each different image sensor 104 to drive associated LED(s) 112 through one or more drivers 108.

Figs. 4-7 illustrate variations of the vision system 100 as vision systems 100A, 100B, 100C, and 100D according to example embodiments of the present disclosure. In Figs. 4-7, the power supplies of Fig. 1 are not shown but should be understood to exist for the image sensors, controller, and/or LED drivers. Although Figs. 4-7 illustrate specific numbers of elements (e.g., three image sensors, three sets of LEDs), more or fewer of certain elements may be included as desired.

As shown in Fig. 4, vision system 100A includes multiple image sensors 104 in communication with a controller 116 and a single LED driver 108. As described above, the LED driver 108 may receive an enable signal from the image sensors 104 and/or the controller 116. Vision system 100A further illustrates switches 400 coupled between the LED driver 108 and sets of LED(s) 112. The switches 400 may be open and closed based on control signals received from the image sensors 104 and/or the controller 116 to control which set of LED(s) 112 are driven by the LED driver 108. Each set of LED(s) 112 may illuminate a different scene, or in some cases, the same scene or parts of the same scene. In some examples, each set of LED(s) 112 emit a different wavelength of light or range of wavelengths of light while each image sensor 104 is configured to detect the wavelength or range of wavelengths of light emitted by a respective set of LED(s) 112. The LED driver 108 may be controlled to drive one set of LED(s) 112 at a time or multiple sets of LED(s) 112 at a time depending on the state of the switches 400. Although not explicitly shown, it should be appreciated that switches the same as or similar to switches 400 may be coupled between the image sensors 104 and the LED driver 108 to couple and decouple each image sensor 104 from the LED driver 108.

Fig. 5 illustrates a vision system 100B that may be the same as or similar to vision system 100A except that vision system 100B includes a master image sensor 104 in communication with an LED driver 108 that drives different sets of LED(s) 112 according to an enable signal received from the master image sensor 104 and/or the controller 116. As in Fig. 4, the switches 400 may receive control signals from the controller 116 and/or the master image sensor 104. The master image sensor 104 may send an enable signal to LED driver 108 on behalf of the subordinate image sensors 104. Although not explicitly illustrated, it should be appreciated that additional LED drivers 108 may be included in the vision system 100B. In this case, the master image sensor 104 may send an enable signal to each LED driver 108.

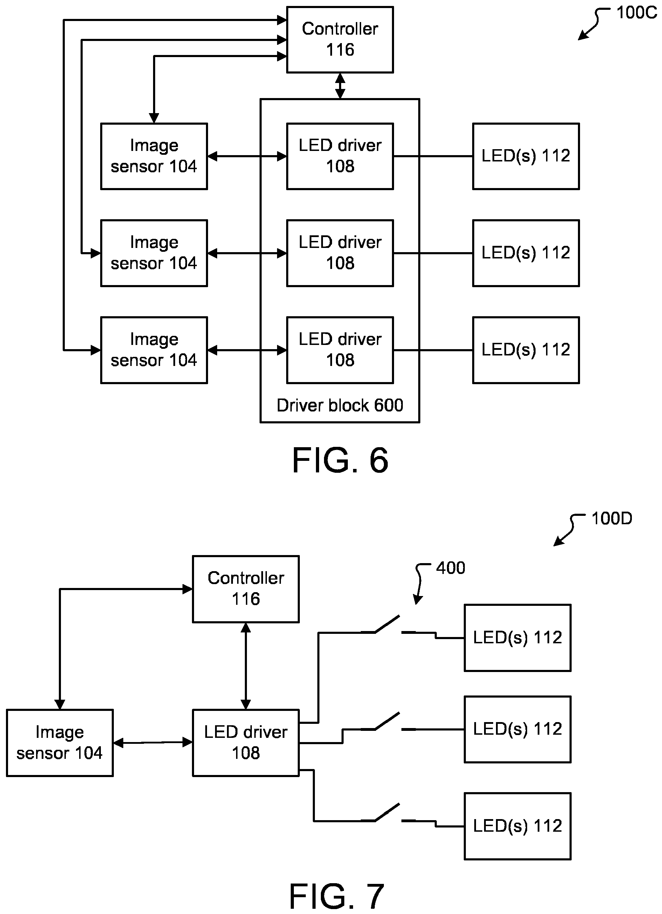

Fig. 6 illustrates a vision system 100C that may be the same or similar to the vision system 100A except that the vision system 100C includes a driver block 600 with multiple LED drivers 108 and excludes the switches 400. Each image sensor 104 may send a respective enable signal to one of the LED drivers 108 to drive a corresponding set of LED(s) 112. Alternatively, the controller 116 sends an enable signal to one or more of the LED drivers 108 in the driver block 600.

Fig. 7 illustrates a vision system 100D that may be the same or similar to the vision system 100A except that the vision system 100D includes a single image sensor 104 in communication with an LED driver 108. As described herein, the image sensor 104 and/or the controller 116 control the states of switches 400 to selectively connect each set of LED(s) 112 to the LED driver 108.

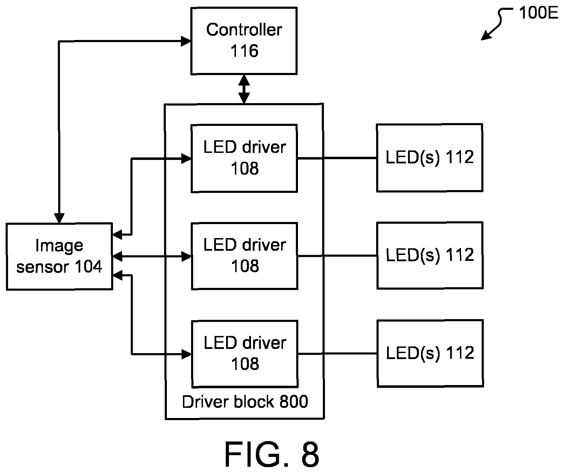

Fig. 8 illustrates a vision system 100E that may be the same or similar to the vision system 100A except that the vision system 100E includes a single image sensor 104 in communication with multiple LED drivers 108 of a driver block 800. Each LED driver 108 may receive an enable signal from the image sensor 104 and/or the controller 116 to drive a respective set of LED(s) 112.

Any of the steps, functions, and operations discussed herein can be performed continuously and automatically.

While the flowcharts have been discussed and illustrated in relation to a particular sequence of events, it should be appreciated that changes, additions, and omissions to this sequence can occur without materially affecting the operation of the disclosed embodiments, configuration, and aspects.

The exemplary systems and methods of this disclosure have been described in relation to image sensors and vision systems. However, to avoid unnecessarily obscuring the present disclosure, the preceding description omits a number of known structures and devices. This omission is not to be construed as a limitation of the scope of the claimed disclosure. Specific details are set forth to provide an understanding of the present disclosure. It should, however, be appreciated that the present disclosure may be practiced in a variety of ways beyond the specific detail set forth herein.

A number of variations and modifications of the disclosure can be used. It would be possible to provide for some features of the disclosure without providing others.

References in the specification to "one embodiment," "an embodiment," "an example embodiment," "some embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in conjunction with one embodiment, it is submitted that the description of such feature, structure, or characteristic may apply to any other embodiment unless so stated and/or except as will be readily apparent to one skilled in the art from the description. The present disclosure, in various embodiments, configurations, and aspects, includes components, methods, processes, systems and/or apparatus substantially as depicted and described herein, including various embodiments, subcombinations, and subsets thereof. Those of skill in the art will understand how to make and use the systems and methods disclosed herein after understanding the present disclosure. The present disclosure, in various embodiments, configurations, and aspects, includes providing devices and processes in the absence of items not depicted and/or described herein or in various embodiments, configurations, or aspects hereof, including in the absence of such items as may have been used in previous devices or processes, e.g., for improving performance, achieving ease, and/or reducing cost of implementation.

The foregoing discussion of the disclosure has been presented for purposes of illustration and description. The foregoing is not intended to limit the disclosure to the form or forms disclosed herein. In the foregoing Detailed Description for example, various features of the disclosure are grouped together in one or more embodiments, configurations, or aspects for the purpose of streamlining the disclosure. The features of the embodiments, configurations, or aspects of the disclosure may be combined in alternate embodiments, configurations, or aspects other than those discussed above. This method of disclosure is not to be interpreted as reflecting an intention that the claimed disclosure requires more features than are expressly recited in each claim. Rather, as the following claims reflect, inventive aspects lie in less than all features of a single foregoing disclosed embodiment, configuration, or aspect. Thus, the following claims are hereby incorporated into this Detailed Description, with each claim standing on its own as a separate preferred embodiment of the disclosure.

Moreover, though the description of the disclosure has included description of one or more embodiments, configurations, or aspects and certain variations and modifications, other variations, combinations, and modifications are within the scope of the disclosure, e.g., as may be within the skill and knowledge of those in the art, after understanding the present disclosure. It is intended to obtain rights, which include alternative embodiments, configurations, or aspects to the extent permitted, including alternate, interchangeable and/or equivalent structures, functions, ranges, or steps to those claimed, whether or not such alternate, interchangeable and/or equivalent structures, functions, ranges, or steps are disclosed herein, and without intending to publicly dedicate any patentable subject matter.

Exemplary aspects are directed to a vision system including an image sensor configured to be exposed to a scene during exposure times, a light emitting diode (LED) driver operatively connected to the image sensor, an LED associated with the image sensor and operatively connected to the LED driver, and one or more processing circuits that synchronize pulses of an enable signal to the exposure times of the image sensor so that each pulse of the enable signal overlaps with one of the exposure times. The pulses of the enable signal are used by the LED driver to cause the LED to output light to the scene.

Any one or more of the above aspects, where the LED outputs light in the infrared spectrum.

Any one or more of the above aspects, where the one or more processing circuits is configured to dynamically adjust the exposure times.

Any one or more of the above aspects, where the pulses of the enable signal are synchronized to the exposure times with a negative time displacement.

Any one or more of the above aspects, where the pulses of the enable signal are synchronized to the exposure times with a positive time displacement.

Exemplary aspects are directed to a method that includes dynamically adjusting exposure times of an image sensor based on an environment to be captured by the image sensor, synchronizing pulses of an enable signal to the dynamically adjusted exposure times of the image sensor so that each pulse of the enable signal overlaps with one of the dynamically adjusted exposure times. The pulses of the enable signal are used to drive a light source that outputs light to the environment.

Any one or more of the above aspects, further including sending the enable signal to a driver that drives the light source according to the pulses of the enable signal.

Any one or more of the above aspects, where the pulses of the enable signal are synchronized to the dynamically adjusted exposure times with a positive time displacement.

Any one or more of the above aspects, where the pulses of the enable signal are synchronized to the dynamically adjusted exposure times with a negative time displacement.

Any one or more of the above aspects, where the pulses of the enable signal are synchronized to the dynamically adjusted exposure times with a negative time displacement and a positive time displacement.

Any one or more of the above aspects, where the negative time displacement is with respect to a beginning of a pulse of the enable signal, and the positive time displacement is with respect an end of a pulse of the enable signal.

Exemplary aspects are directed to a vision system including an image sensor configured to be exposed to a scene during first exposure times, a first LED that outputs light to the scene according to a first enable signal, a second LED that outputs light to the scene according to a second enable signal that is distinct from the first enable signal, and one or more processing circuits that synchronize pulses of the first enable signal to the first exposure times so that each pulse of the first enable signal overlaps with one of the first exposure times, and that synchronize pulses of the second enable signal to second exposure times so that each pulse of the second enable signal overlaps with one of the second exposure times.

Any one or more of the above aspects, where the one or more processing circuits are integrated with the image sensor.

Any one or more of the above aspects, further including a controller separate from the image sensor and that includes the one or more processing circuits.

Any one or more of the above aspects, where the pulses of the first enable signal are synchronized to the first exposure times and the pulses of the second enable signal are synchronized to the second exposure times with a negative time displacement, a positive time displacement, or both.

Any one or more of the above aspects, where the one or more processing circuits dynamically adjust the first exposure times and the second exposure times based on the scene to be captured by the image sensor.

Any one or more of the above aspects, where the second exposure times are exposure times of the image sensor.

Any one or more of the above aspects, where the second exposure times are exposure times of another image sensor.

Any one or more of the above aspects, where the first exposure times are distinct from the second exposure times.

Any one or more of the above aspects, where the first LED outputs light within a first range of wavelengths, and where the second LED outputs light within a second range of wavelengths that does not overlap with the first range of wavelengths.

Any one or more of the above aspects/embodiments as substantially disclosed herein.

Any one or more of the aspects/embodiments as substantially disclosed herein optionally in combination with any one or more other aspects/embodiments as substantially disclosed herein.

One or means adapted to perform any one or more of the above aspects/embodiments as substantially disclosed herein.

Any one or more of the features disclosed herein.

Any one or more of the features as substantially disclosed herein.

Any one or more of the features as substantially disclosed herein in combination with any one or more other features as substantially disclosed herein.

Any one of the aspects/features/embodiments in combination with any one or more other aspects/features/embodiments.

Use of any one or more of the aspects or features as disclosed herein.

It is to be appreciated that any feature described herein can be claimed in combination with any other feature(s) as described herein, regardless of whether the features come from the same described embodiment.

As used herein, the singular forms "a," "an," and "the" are intended to include the plural forms as well, unless the context clearly indicates otherwise. It will be further understood that the terms "include," "including," "includes," "comprise," "comprises," and/or "comprising," when used in this specification, specify the presence of stated features, integers, steps, operations, elements, and/or components, but do not preclude the presence or addition of one or more other features, integers, steps, operations, elements, components, and/or groups thereof. The term "and/or" includes any and all combinations of one or more of the associated listed items.

The term "a" or "an" entity refers to one or more of that entity. As such, the terms "a" (or "an"), "one or more," and "at least one" can be used interchangeably herein. It is also to be noted that the terms "comprising," "including," and "having" can be used interchangeably.

The phrases "at least one," "one or more," "or," and "and/or" are open-ended expressions that are both conjunctive and disjunctive in operation. For example, each of the expressions "at least one of A, B and C," "at least one of A, B, or C," "one or more of A, B, and C," "one or more of A, B, or C," and "A, B, and/or C" means A alone, B alone, C alone, A and B together, A and C together, B and C together, or A, B, and C together. When each one of A, B, and C in the above expressions refers to an element, such as X, Y, and Z, or a class of elements, such as X₁-Xₙ, Y₁-Yₘ, and Z₁-Zₒ, the phrase is intended to refer to a single element selected from X, Y, and Z, a combination of elements selected from the same class (e.g., X₁ and X₂) as well as a combination of elements selected from two or more classes (e.g., Yi and Zₒ).

The term "automatic" and variations thereof, as used herein, refers to any process or operation, which is typically continuous or semi-continuous, done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

The terms "determine," "calculate," "compute," and variations thereof, as used herein, are used interchangeably and include any type of methodology, process, mathematical operation, or technique.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and this disclosure.

The present invention is further defined by the following aspects.
1. A vision system (100), comprising:
   an image sensor (104) configured to be exposed to a scene during exposure times;
   a light emitting diode (LED) driver (108) operatively connected to the image sensor (104);
   an LED (112) associated with the image sensor (104) and operatively connected to the LED driver (108); and
   one or more processing circuits (124b, 124c) that synchronize pulses of an enable signal to the exposure times of the image sensor (104) so that each pulse of the enable signal overlaps with one of the exposure times, the pulses of the enable signal being used by the LED driver (108) to cause the LED (112) to output light to the scene.
2. The vision system (100) of aspect 1, wherein the LED (112) outputs light in the infrared spectrum.
3. The vision system (100) of aspect 1 or 2, wherein the one or more processing circuits (124b, 124c) is configured to dynamically adjust the exposure times.
4. The vision system (100) of aspect 1, 2, or 3, wherein the pulses of the enable signal are synchronized to the exposure times with a negative time displacement.
5. The vision system (100) of any one of aspect 1 to 4, wherein the pulses of the enable signal are synchronized to the exposure times with a positive time displacement.
6. A method, comprising:
   dynamically adjusting exposure times of an image sensor (104) based on an environment to be captured by the image sensor (104); and
   synchronizing pulses of an enable signal to the dynamically adjusted exposure times of the image sensor (104) so that each pulse of the enable signal overlaps with one of the dynamically adjusted exposure times, the pulses of the enable signal being used to drive a light source (112) that outputs light to the environment.
7. The method of aspect 6, further comprising:
   sending the enable signal to a driver that drives the light source (112) according to the pulses of the enable signal.
8. The method of aspect 6 or 7, wherein the pulses of the enable signal are synchronized to the dynamically adjusted exposure times with a positive time displacement.
9. The method of aspect 6, 7, or 8, wherein the pulses of the enable signal are synchronized to the dynamically adjusted exposure times with a negative time displacement.
10. The method of any one of aspecst 6 to 9, wherein the pulses of the enable signal are synchronized to the dynamically adjusted exposure times with a negative time displacement and a positive time displacement.
11. The method of aspect 10, wherein the negative time displacement is with respect to a beginning of a pulse of the enable signal, and the positive time displacement is with respect an end of a pulse of the enable signal.
12. A vision system (100), comprising:
   an image sensor (104) configured to be exposed to a scene during first exposure times;
   a first LED (112) that outputs light to the scene according to a first enable signal;
   a second LED (112) that outputs light to the scene according to a second enable signal that is distinct from the first enable signal; and
   one or more processing circuits (124b, 124c) that:
      synchronize pulses of the first enable signal to the first exposure times so that each pulse of the first enable signal overlaps with one of the first exposure times; and
      synchronize pulses of the second enable signal to second exposure times so that each pulse of the second enable signal overlaps with one of the second exposure times.
13. The vision system (100) of aspect 12, wherein the one or more processing circuits (124b, 124c) are integrated with the image sensor (104).
14. The vision system (100) of aspect 12 or 13, further comprising a controller separate from the image sensor (104) and that includes the one or more processing circuits (124b, 124c).
15. The vision system (100) of aspect 12, 13, or 14, wherein the pulses of the first enable signal are synchronized to the first exposure times and the pulses of the second enable signal are synchronized to the second exposure times with a negative time displacement, a positive time displacement, or both.
16. The vision system (100) of any one of aspects 12 to 15, wherein the one or more processing circuits (124b, 124c) dynamically adjust the first exposure times and the second exposure times based on the scene to be captured by the image sensor (104).
17. The vision system (100) of any one of aspect 12 to 16, wherein the second exposure times are exposure times of the image sensor (104).
18. The vision system (100) of any one of aspects 12 to 17, wherein the second exposure times are exposure times of another image sensor (104).
19. The vision system (100) of any one of aspect 12 to 18, wherein the first exposure times are distinct from the second exposure times.
20. The vision system (100) of any one of aspect 12 to 19, wherein the first LED (112) outputs light within a first range of wavelengths, and wherein the second LED (112) outputs light within a second range of wavelengths that does not overlap with the first range of wavelengths.

It should be understood that every maximum numerical limitation given throughout this disclosure is deemed to include each and every lower numerical limitation as an alternative, as if such lower numerical limitations were expressly written herein. Every minimum numerical limitation given throughout this disclosure is deemed to include each and every higher numerical limitation as an alternative, as if such higher numerical limitations were expressly written herein. Every numerical range given throughout this disclosure is deemed to include each and every narrower numerical range that falls within such broader numerical range, as if such narrower numerical ranges were all expressly written herein.

## Claims

1. A vision system (100), comprising:
an image sensor (104) configured to be exposed to a scene during exposure times;
a light emitting diode (LED) driver (108) operatively connected to the image sensor (104);
an LED (112) associated with the image sensor (104) and operatively connected to the LED driver (108); and
one or more processing circuits (124b, 124c) that synchronize pulses of an enable signal to the exposure times of the image sensor (104) so that each pulse of the enable signal overlaps with one of the exposure times, the pulses of the enable signal being used by the LED driver (108) to cause the LED (112) to output light to the scene.

2. The vision system (100) of claim 1, wherein the LED (112) outputs light in the infrared spectrum.

3. The vision system (100) of claim 1 or 2, wherein the one or more processing circuits (124b, 124c) is configured to dynamically adjust the exposure times.

4. The vision system (100) of claim 1, 2, or 3, wherein the pulses of the enable signal are synchronized to the exposure times with a negative time displacement and/or positive time displacement.

5. A method, comprising:
dynamically adjusting exposure times of an image sensor (104) based on an environment to be captured by the image sensor (104); and
synchronizing pulses of an enable signal to the dynamically adjusted exposure times of the image sensor (104) so that each pulse of the enable signal overlaps with one of the dynamically adjusted exposure times, the pulses of the enable signal being used to drive a light source (112) that outputs light to the environment.

6. The method of claim 5, further comprising:
sending the enable signal to a driver that drives the light source (112) according to the pulses of the enable signal.

7. The method of claim 5 or 6, wherein the pulses of the enable signal are synchronized to the dynamically adjusted exposure times with a positive time displacement and/or a negative time displacement.

8. The method of claim 7, wherein the negative time displacement is with respect to a beginning of a pulse of the enable signal, and the positive time displacement is with respect an end of a pulse of the enable signal.

9. A vision system (100), comprising:
an image sensor (104) configured to be exposed to a scene during first exposure times;
a first LED (112) that outputs light to the scene according to a first enable signal;
a second LED (112) that outputs light to the scene according to a second enable signal that is distinct from the first enable signal; and
one or more processing circuits (124b, 124c) that:
synchronize pulses of the first enable signal to the first exposure times so that each pulse of the first enable signal overlaps with one of the first exposure times; and
synchronize pulses of the second enable signal to second exposure times so that each pulse of the second enable signal overlaps with one of the second exposure times.

10. The vision system (100) of claim 9, wherein the one or more processing circuits (124b, 124c) are integrated with the image sensor (104).

11. The vision system (100) of claim 9 or 10, further comprising a controller separate from the image sensor (104) and that includes the one or more processing circuits (124b, 124c).

12. The vision system (100) of claim 9, 10, or 11, wherein the pulses of the first enable signal are synchronized to the first exposure times and the pulses of the second enable signal are synchronized to the second exposure times with a negative time displacement, a positive time displacement, or both.

13. The vision system (100) of any one of claims 9 to 12, wherein the one or more processing circuits (124b, 124c) dynamically adjust the first exposure times and the second exposure times based on the scene to be captured by the image sensor (104).

14. The vision system (100) of any one of claims 9 to 13, wherein the second exposure times are exposure times of the image sensor (104) and/or another image sensor (104).

15. The vision system (100) of any one of claims 9 to 14, wherein the first exposure times are distinct from the second exposure times.

16. The vision system (100) of any one of claims 9 to 15, wherein the first LED (112) outputs light within a first range of wavelengths, and wherein the second LED (112) outputs light within a second range of wavelengths that does not overlap with the first range of wavelengths.
